# EUROPEAN PATENT APPLICATION

(11) **EP 4 723 505 A1**
(43) Date of publication of application: **08.04.2026**
(21) Application number: 24811106.4
(22) Date of filing: 21.05.2024
(51) Int. Cl.: H04B 7/0456, H04W 16/28, H04W 52/18

(54) **TERMINAL, WIRELESS COMMUNICATION METHOD, AND BASE STATION**

(30) Priority: 25.05.2023 JP 2023086466
(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2024/018646
(87) International publication number: WO 2024/242099

(57) **Abstract**

To appropriately control UL fullpower transmission using more than four antenna ports. A terminal according to an aspect of the present disclosure includes: a control section that selects, in a case where fullpower mode 1 is configured for a transmission corresponding to a specific number of antenna groups, a precoder added from a codebook with the fullpower mode 1 not configured; and a transmitting section that performs fullpower transmission by employing the precoder.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement, and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and the like) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 NR, uplink (UL) Multi Input Multi Output (MIMO) transmission with up to four layers is supported. For future NR, in order to achieve higher spectral efficiency, supporting of UL transmission with the number of layers greater than four is under study. For example, for Rel-18 NR, transmission with up to 6 ranks using six antenna ports, transmission with up to 6 or 8 ranks using eight antenna ports, and the like are under study.

However, studies have not yet progressed on UL fullpower transmission using more than four antenna ports (the number of antenna ports more than four). Unless an appropriate control method for fullpower transmission is defined, an increase in communication throughput may be suppressed.

In view of this, an object of the present disclosure is to provide a terminal, a radio communication method, and a base station that enable UL fullpower transmission using more than four antenna ports to be appropriately controlled.

### Solution to Problem

A terminal according to an aspect of the present disclosure includes: a control section that selects, in a case where fullpower mode 1 is configured for a transmission corresponding to a specific number of antenna groups, a precoder added from a codebook with the fullpower mode 1 not configured; and a transmitting section that performs fullpower transmission by employing the precoder.

### Advantageous Effects of Invention

An aspect of the present disclosure enables UL fullpower transmission using more than four antenna ports to be appropriately controlled.

### Brief Description of Drawings

[FIG. 1] FIG. 1 is a diagram to show an example of a table of precoding matrix W for single-layer (rank 1) transmission using four antenna ports with a transform precoder being disabled, in Rel-16 NR.
[FIG. 2] FIG. 2 is a diagram to show an example of a table of precoding matrix W for 2-layer (rank 2) transmission using four antenna ports with a transform precoder being disabled, in Rel-16 NR.
[FIG. 3] FIG. 3 is a diagram to show an example of a table of precoding matrix W for 3-layer (rank 3) transmission using four antenna ports with a transform precoder being disabled, in Rel-16 NR.
[FIG. 4] FIG. 4 is a diagram to show an example of a table of precoding matrix W for 4-layer (rank 4) transmission using four antenna ports with a transform precoder being disabled, in Rel-16 NR.
[FIG. 5] FIG. 5 is a diagram to show examples of a configuration of a UE assumed by UE capabilities 1 to 3 related to fullpower transmission.
[FIG. 6] FIGS. 6A and 6B are each a diagram to show an example of TPMI groups.
[FIG. 7] FIG. 7 is a diagram to show an example of a correspondence relation between a precoding information and number of layers field value and the number of layers and a TPMI, in Rel-16 NR.
[FIG. 8] FIG. 8 is a diagram to show examples of an antenna layout of eight antenna ports.
[FIG. 9] FIGS. 9A to 9C are each a diagram to show an example of a precoder associated with an antenna group.
[FIG. 10] FIGS. 10A and 10B are each a diagram to show an example of an additional precoder for rank 1 according to a first embodiment.
[FIG. 11] FIGS. 11A and 11B are each a diagram to show an example of an additional precoder for rank 1 according to a second embodiment.
[FIG. 12] FIGS. 12A to 12C are each a diagram to show an example of an additional precoder for rank 2 according to the second embodiment.
[FIG. 13] FIGS. 13A to 13C are each a diagram to show an example of an additional precoder for rank 3 according to the second embodiment.
[FIG. 14] FIG. 14A is a diagram to show an example of an additional precoder for rank 1 according to a third embodiment. FIG. 14B is a diagram to show an example of an additional precoder for rank 7 according to the third embodiment.
[FIG. 15] FIGS. 15A and 15B are each a diagram to show an example of a correspondence relation between a precoding information field value and the number of layers and a TPMI according to a fourth embodiment.
[FIG. 16] FIGS. 16A and 16B are each a diagram to show an example of a correspondence relation between a precoding information field value and the number of layers and a TPMI according to the fourth embodiment.
[FIG. 17] FIG. 17 is a diagram to show an example of a schematic structure of a radio communication system according to one embodiment.
[FIG. 18] FIG. 18 is a diagram to show an example of a structure of a base station according to one embodiment.
[FIG. 19] FIG. 19 is a diagram to show an example of a structure of a user terminal according to one embodiment.
[FIG. 20] FIG. 20 is a diagram to show an example of a hardware structure of the base station and the user terminal according to one embodiment.
[FIG. 21] FIG. 21 is a diagram to show an example of a vehicle according to one embodiment.

### Description of Embodiments

### (Control of Transmission of SRS and PUSCH)

In Rel-15 NR, a terminal (user terminal, User Equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of a periodic SRS (P-SRS), a semi-persistent SRS (SP-SRS), and an aperiodic CSI (Aperiodic SRS (A-SRS)). Note that the UE may transmit a P-SRS and an SP-SRS periodically (or periodically after activation), and transmit an A-SRS on the basis of an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook based or non-codebook based uplink shared channel (Physical Uplink Shared Channel (PUSCH)) transmission based on an SRI.

For example, in a case of codebook based transmission (codebook-based transmission), the UE may determine a precoder (precoding matrix) for the PUSCH transmission, based on an SRI, a transmitted rank indicator (TRI), and a transmitted precoding matrix indicator (TPMI). In a case of non-codebook based transmission (non-codebook-based transmission), the UE may determine a precoder for the PUSCH transmission, based on an SRI.

The SRS resource information may include an SRS resource ID (SRS-ResourceId), the number of SRS ports, an SRS port number, a transmission Comb, SRS resource mapping (for example, time and/or frequency resource position, resource offset, resource periodicity, the number of times of repetition, the number of SRS symbols, SRS bandwidth, and the like), hopping related information, an SRS resource type, a sequence ID, spatial relation information for an SRS, and the like.

The spatial relation information for an SRS (for example, an RRC information element "spatialRelationInfo") may indicate spatial relation information between a certain reference signal and the SRS. The certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information for the SRS may include, as an index for the certain reference signal described above, at least one of an SSB index, a CSI-RS resource ID, and an SRS resource ID.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information for the SRS may include a serving cell index, a BWP index (BWP ID), and the like corresponding to the certain reference signal described above.

With respect to a certain SRS resource, when spatial relation information related to an SSB or CSI-RS and an SRS is configured, the UE may transmit the SRS resource by using a spatial domain filter (spatial domain transmission filter) the same as a spatial domain filter (spatial domain reception filter) for reception of the SSB or CSI-RS. In this case, the UE may assume that a UE receive beam for the SSB or CSI-RS is the same as a UE transmit beam for the SRS.

With respect to a certain SRS (target SRS) resource, when spatial relation information related to another SRS (reference SRS) and the SRS (target SRS) is configured, the UE may transmit the target SRS resource by using a spatial domain filter (spatial domain transmission filter) the same as a spatial domain filter (spatial domain transmission filter) for transmission of the reference SRS. In other words, in this case, the UE may assume that a UE transmit beam for the reference SRS is the same as a UE transmit beam for the target SRS.

Based on a value of a certain field (for example, an SRS resource indicator (SRI) field) in DCI (for example, DCI format 0_1), the UE may determine a spatial relation of a PUSCH scheduled by the DCI. Specifically, the UE may use, for the PUSCH transmission, spatial relation information (for example, the RRC information element "spatialRelationInfo") of an SRS resource determined based on the value (for example, SRI) of the certain field.

In Rel-15/16 NR, when codebook based transmission is used for a PUSCH, the UE may be configured with an SRS resource set including two SRS resources at maximum with codebook usage, by RRC, and may be indicated with one of the two SRS resources at maximum by DCI (one-bit SRI field). A transmit beam for the PUSCH may be specified by the SRI field.

Based on a precoding information and number of layers field (for the sake of the simplicity, which may also be referred to as a precoding information field), the UE may judge a TPMI and the number of layers (transmission rank) for the PUSCH. The UE may select a precoder, based on the TPMI, the number of layers, and the like, from a codebook for uplink related to the number of ports the same as the number of SRS ports indicated by a higher layer parameter "nrofSRS-Ports" configured for an SRS resource specified by the SRI field.

In Rel-15/16 NR, when non-codebook based transmission is used for a PUSCH, the UE may be configured with an SRS resource set including four SRS resources at maximum with non-codebook usage, by RRC, and may be indicated with one or more of the four SRS resources at maximum by DCI (two-bit SRI field).

The UE may determine the number of layers (transmission rank) for the PUSCH, based on the SRI field. For example, the UE may judge that the number of SRS resources indicated by the SRI field is the same as the number of layers for the PUSCH. The UE may calculate a precoder for the SRS resource.

When a CSI-RS related to the SRS resource (or SRS resource set to which the SRS resource belongs) (which may be referred to as an associated CSI-RS) is configured in a higher layer, a transmit beam for the PUSCH may be calculated based on (measurement of) the configured related CSI-RS. Otherwise, a transmit beam for the PUSCH may be specified by an SRI.

Note that the UE may be configured with whether to use codebook based PUSCH transmission or use non-codebook based PUSCH transmission by a higher layer parameter "txConfig" indicating a transmission scheme. The parameter may indicate a value of "codebook" or "non-codebook (nonCodebook)."

In the present disclosure, a codebook based PUSCH (codebook based PUSCH transmission, codebook based transmission) may mean a PUSCH when the UE is configured with "codebook" as a transmission scheme. In the present disclosure, a non-codebook based PUSCH (non-codebook based PUSCH transmission, non-codebook based transmission) may mean a PUSCH when the UE is configured with "non-codebook" as a transmission scheme.

### (Determination of PUSCH Precoder in Codebook (CB) Based Transmission)

As described above, in a case of codebook (CB) based transmission, a UE may determine a precoder for PUSCH transmission on the basis of an SRI, a TRI, a TPMI, and the like.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH.

The TRI and the TPMI may be specified by precoding information and number of layers field ("Precoding information and number of layers" field) of the DCI.

The UE may report UE capability information related to a precoder type and be configured, by a base station, with the precoder type based on the UE capability information by higher layer signaling. The UE capability information may be precoder type information to be used by the UE in PUSCH transmission (for example, which may be indicated with an RRC parameter "pusch-TransCoherence").

The UE may determine a precoder to be used for the PUSCH transmission on the basis of precoder type information (for example, an RRC parameter "codebookSubset") included in PUSCH configuration information (for example, "PUSCH-Config" information element of RRC signaling) notified by using higher layer signaling. The UE may be configured with a subset of a PMI specified by the TPMI, by codebookSubset.

Note that the precoder type may be specified by any one of full coherent (fully coherent), partial coherent, and non-coherent (non coherent), or a combination of at least two of them (which may be indicated, for example, by a parameter such as "fullyAndPartialAndNonCoherent" or "partialAndNonCoherent").

For example, the RRC parameter "pusch-TransCoherence" indicating a UE capability may indicate full coherent (fullCoherent), partial coherent (partialCoherent), or non-coherent (nonCoherent). The RRC parameter "codebookSubset" may indicate "fullyAndPartialAndNonCoherent," "partialAndNonCoherent," or "nonCoherent."

Full coherent (hereinafter, which may be abbreviated as FC) may mean that all the antenna ports to be used for transmission are synchronized (which may be expressed as all the antenna ports are able to be matched in terms of phase, are able to be phase-controlled per coherent antenna port, are able to be appropriately applied with a precoder per coherent antenna port, or the like). Partial coherent (hereinafter, which may be abbreviated as PC) may mean that some ports of the antenna ports to be used for transmission are synchronized but the ports and the other ports are not synchronized. Non-coherent (hereinafter, which may be abbreviated as NC) may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

In the present disclosure, a non-coherent UE and a UE having a capability related to non-coherent may be interchangeably interpreted. A partial-coherent UE and a UE having a capability related to partial coherent may be interchangeably interpreted. A full-coherent UE and a UE having a capability related to full coherent may be interchangeably interpreted.

A non-coherent UE and a UE configured with a codebook subset of "nonCoherent" in a higher layer may be interchangeably interpreted. A partial-coherent UE and a UE configured with a codebook subset of "partialAndNonCoherent" in a higher layer may be interchangeably interpreted. A full-coherent UE and a UE configured with a codebook subset of "fullyAndPartialAndNonCoherent" in a higher layer may be interchangeably interpreted.

A non-coherent UE and a UE capable of transmission using a non-coherent codebook may be interchangeably interpreted. A partial-coherent UE and a UE capable of transmission using a partial-coherent codebook may be interchangeably interpreted. A full-coherent UE and a UE capable of transmission using a full-coherent codebook may be interchangeably interpreted.

In the present disclosure, a precoder type, coherency, PUSCH transmission coherence, a coherent type, a coherence type, a codebook type, a codebook subset, a codebook subset type, and the like may be interchangeably interpreted.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

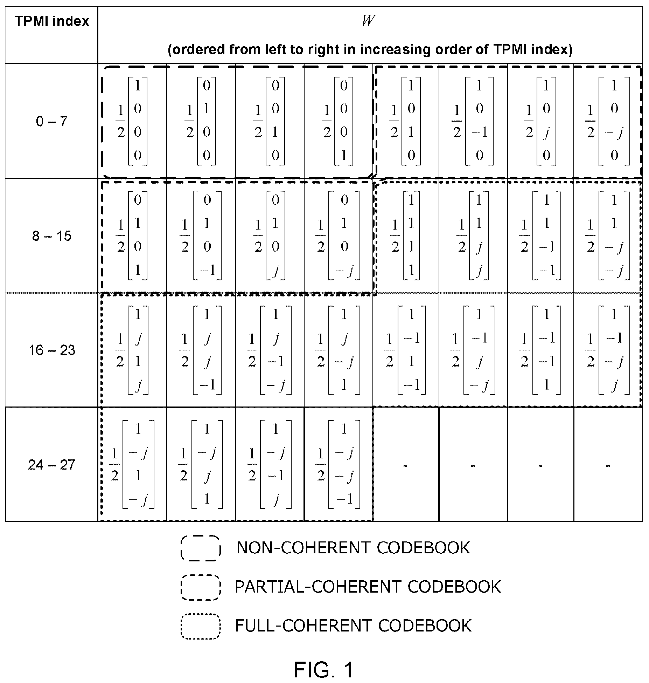

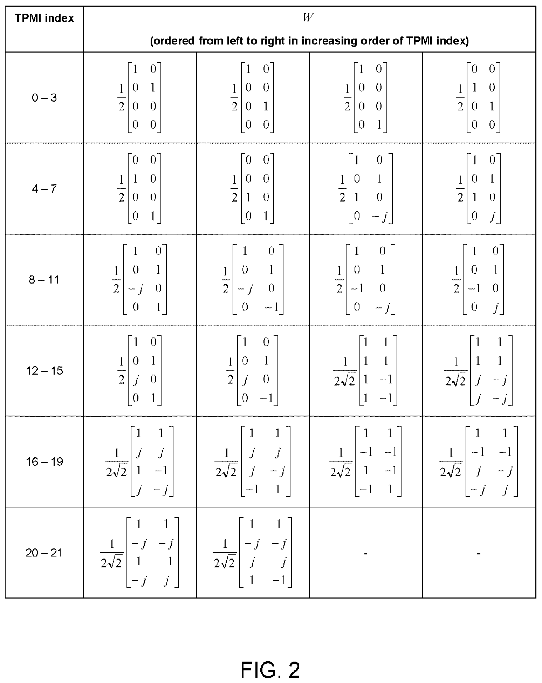

FIGS. 1 to 4 are each a diagram to show an example of association between codebook subsets and TPMI indices. FIG. 1 corresponds to a table of precoding matrix W for single-layer (rank 1) transmission using four antenna ports with transform precoding (which may be referred to as a transform precoder) being disabled, in Rel-16 NR. In FIG. 1, corresponding W is shown, from left to right in increasing order of TPMI indices (this similarly applies to FIGS. 2 to 4).

Such a correspondence relation (which may be referred to as a table) indicating W corresponding to TPMI indices as shown in FIGS. 1 to 4 is also referred to as a codebook. Part of the codebook is also referred to as a codebook subset.

In FIG. 1, in a case where the codebook subset (codebookSubset) is fullyAndPartialAndNonCoherent, a UE is notified of a TPMI of any one of 0 to 27, for single-layer transmission. In a case where the codebook subset is partialAndNonCoherent, the UE is configured with a TPMI of any one of 0 to 11, for single-layer transmission. In a case where the codebook subset is nonCoherent, the UE is configured with a TPMI of any one of 0 to 3, for single-layer transmission.

FIGS. 2 to 4 correspond to tables of precoding matrix W for 2- to 4-layer (ranks 2 to 4) transmission, respectively, that use four antenna ports with transform precoding being disabled, in Rel-16 NR.

In FIG. 2, TPMIs that a UE is notified of for 2-layer transmission are 0 to 21 (the codebook subset is fullyAndPartialAndNonCoherent), 0 to 13 (the precoder type is partialAndNonCoherent), or 0 to 5 (the precoder type is nonCoherent).

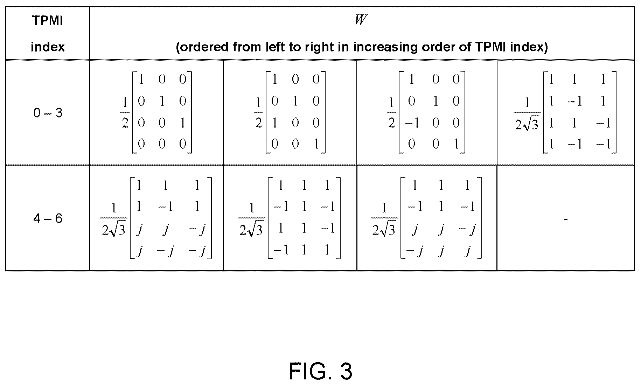

In FIG. 3, TPMIs that a UE is notified of for 3-layer transmission are 0 to 6 (the codebook subset is fullyAndPartialAndNonCoherent), 0 to 2 (the precoder type is partialAndNonCoherent), or 0 (the precoder type is nonCoherent).

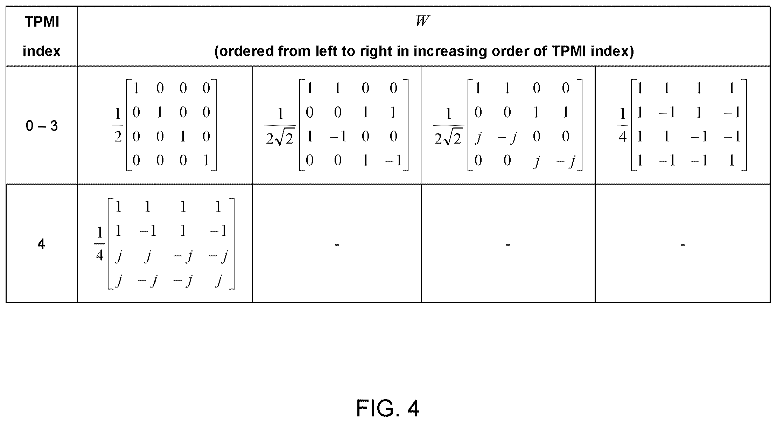

In FIG. 4, TPMIs that a UE is notified of for 4-layer transmission are 0 to 4 (the codebook subset is fullyAndPartialAndNonCoherent), 0 to 2 (the precoder type is partialAndNonCoherent), or 0 (the precoder type is nonCoherent).

Note that a precoding matrix with only one element per column being other than 0 may be referred to as a non-coherent codebook. A precoding matrix with only a specific number of elements (more than one but not all the elements in a column) per column being other than 0 may be referred to as a partial-coherent codebook. A precoding matrix with none of the elements per column being 0 may be referred to as a full-coherent codebook.

The non-coherent codebook and the partial-coherent codebook may each be referred to as an antenna selection precoder, an antenna port selection precoder, or the like. For example, the non-coherent codebook (non-coherent precoder) may be referred to as a one-port selection precoder, a one-port port selection precoder (1-port port selection precoder), or the like. The partial-coherent codebook (partial-coherent precoder) may be referred to as an x-port selection precoder (x is an integer greater than 1), an x-port port selection precoder, or the like. The full-coherent codebook may be referred to as a non-antenna selection precoder, an all-port precoder, or the like.

Note that, in the present disclosure, the partial-coherent codebook may correspond to a codebook (i.e., codebooks with TPMI = 4 to 11, in a case of single-layer transmission with four antenna ports) obtained by excluding a codebook corresponding to a TPMI specified for a UE configured with a non-coherent codebook subset (for example, the RRC parameter "codebookSubset" = "nonCoherent") from codebooks (precoding matrices) corresponding to TPMIs specified, by DCI, for codebook based transmission, for a UE configured with a partial-coherent codebook subset (for example, the RRC parameter "codebookSubset" = "partialAndNonCoherent").

Note that, in the present disclosure, the full-coherent codebook may correspond to a codebook (i.e., codebooks with TPMI = 12 to 27, in a case of single-layer transmission with four antenna ports) obtained by excluding a codebook corresponding to a TPMI specified for a UE configured with a partial-coherent codebook subset (for example, the RRC parameter "codebookSubset" = "partialAndNonCoherent") from codebooks (precoding matrices) corresponding to TPMIs specified, by DCI, for codebook based transmission, for a UE configured with a full-coherent codebook subset (for example, the RRC parameter "codebookSubset" = "fullyAndPartialAndNonCoherent").

### (Fullpower UL Transmission)

According to a specification of Rel-15 NR, transmit power of a PUSCH is allocated equally to antenna ports. In a case where a UE performs codebook based transmission using a plurality of ports, when part of the codebook (specifically, partial-coherent/non-coherent codebook) is used, the transmit power may be small (fullpower transmission cannot be made) as compared with a single-port case.

For example, in the table of FIG. 1, assuming the transmit power of the full-coherent codebook corresponding to indices 12 to 27 as 1 (= (1/2)² * 4), the transmit power of the partial-coherent codebook corresponding to indices 4 to 11 is 1/2 (= (1/2)² * 2) and the transmit power of the non-coherent codebook corresponding to indices 0 to 3 is 1/4 (= (1/2)² * 1).

Even when codebooks are used, it is preferable that fullpower UL transmission is appropriately performed. In Rel-16 NR, the following UE capabilities 1 to 3 are defined related to codebook based fullpower UL transmission using a plurality of power amplifiers (PAs):
- UE capability 1: every transmission chain (Tx chain) supports (or has) a PA (full rated PA) capable of outputting a maximum rated power.
- UE capability 2: no transmission chain supports any full rated PA.
- UE capability 3: a subset (part) of transmission chains supports a full rated PA.

Note that a UE having at least one of the UE capabilities 1 to 3 may mean the UE supports fullpower of UL transmission. Apart from the UE capabilities 1 to 3, a UE may report, to a network (NW) (for example, base station), capability information indicating supporting of a UL fullpower transmission capability.
A UE may be configured, by a network, with supporting of fullpower transmission.

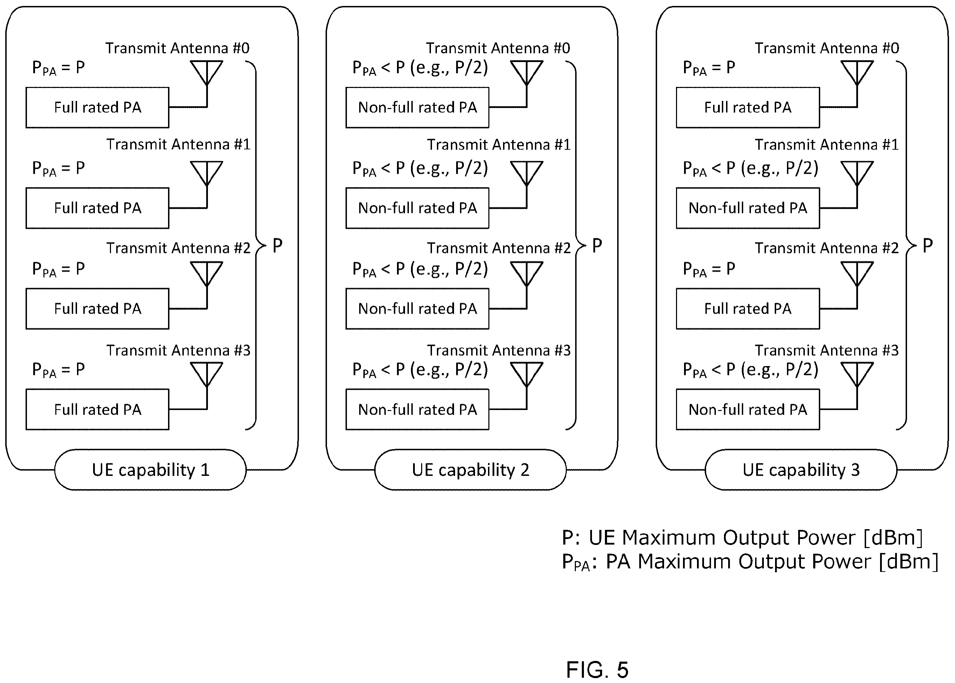

FIG. 5 is a diagram to show examples of a configuration of a UE assumed by the UE capabilities 1 to 3 related to fullpower transmission. In FIG. 5, as the configuration of the UE, only PAs and transmission antenna ports (which may be interpreted as transmit antennas) are simply shown. Note that, although an example with the number of PAs and the number of transmission antenna ports each being four, examples are not limited to this.

Note that P denotes UE maximum output power [dBm] and P_{PA} denotes PA maximum output power [dBm]. Note that P may be 23 dBm for a UE with power class 3 and may be 26 dBm for a UE with power class 2, for example. In the present disclosure, although P_{PA} ≤ P is assumed, any embodiment of the present disclosure may be applied to a case of P_{PA} > P.

With the configuration of UE capability 1, although high cost in the implementation is assumed, fullpower transmission is possible by using any one or more of the antenna ports. Note that the UE capability 1 may indicate a capability to support mode 0.

The configuration of UE capability 2 includes non-full rated PAs only and is expected to be inexpensive in the implementation, but using only one of the antenna ports does not allow fullpower transmission, and thus a phase, amplitude, and the like of a signal to be input to each PA are required to be controlled.

The configuration of UE capability 3 is a moderate configuration between the configuration of UE capability 1 and the configuration of UE capability 2. Antenna ports capable of fullpower transmission (in the present example, transmit antennas #0 and #2) and antenna ports incapable of fullpower transmission (in the present example, transmit antennas #1 and #3) are included mixed.

Note that the indices, the number, and the like of the antenna ports capable of fullpower transmission in the UE capability 3 are not limited to this. In the present example, although P_{PA} = P/2 is assumed for P_{PA} of each non-full rated PA, the value of P_{PA} is not limited to this.

Meanwhile, it is under study that a UE supporting the UE capability 2 or 3 is configured with at least one of two modes (modes 1 and 2) for operation of fullpower transmission.

Here, mode 1 may be a mode (for example, which may be referred to as a first fullpower transmission mode) configured for a UE such that one or a plurality of SRS resources included in one SRS resource set of "codebook" usage have the same number of SRS ports. A UE that operates in mode 1 may perform fullpower transmission by using all the antenna ports (by using the non-antenna selection precoder).

The UE that operates in mode 1 may be configured, by a network, to use a subset of TPMIs that ports in one layer are to be jointed for fullpower transmission to be achieved. A precoder of a TPMI corresponding to "fullyAndPartialAndNonCoherent" defined in Rel-15 NR may be included, and only for a rank value not usable for fullpower transmission, a new codebook subset may be introduced.

Meanwhile, mode 2 may be a mode (for example, which may be referred to as a second fullpower transmission mode) configured for a UE such that one or a plurality of SRS resources included in one SRS resource set of "codebook" usage have different numbers of SRS ports. A UE that operates in mode 2 may perform fullpower transmission by using not all the antenna ports but part of the antenna ports.

The UE that operates in mode 2 may transmit a PUSCH and an SRS in the same method, irrespective of whether antenna virtualization is used. The UE in mode 2 may be notified of, in order to support an SRS resource with more than one port, a set of TPMIs for fullpower transmission to be achieved. In a case of mode 2, two or three SRS resources may be configured (two at maximum in Rel-15 NR) per SRS resource set.

Mode 1 has an advantage, as compared with mode 2, in that the size of the SRI field required is sufficient to be small (one SRS resource allows fullpower transmission).

Mode 2 has an advantage, as compared with mode 1, in that single-port transmission and multi-port transmission can be dynamically switched by DCI. Furthermore, fullpower transmission is possible with part of the antenna ports, allowing fullpower transmission only using an antenna with a full rated PA and allowing fullpower transmission only using a coherent antenna, for example.

Modes 0, 1, and 2 described above may be referred to as fullpower modes 0, 1, and 2, respectively. Fullpower mode 0 may be simply referred to as fullpower.

In Rel-16 NR, a UE may report one or more of UE capability information indicating supporting of mode 0 (ul-FullPwrMode-r16), UE capability information indicating supporting of mode 1 (ul-FullPwrMode1-r16), and UE capability information indicating supporting of mode 2 (such as ul-FullPwrMode2-MaxSRS-ResInSet-r16 or ul-FullPwrMode2-SRSConfig-diffNumSRSPorts-r16).

In addition, it is under study that a UE reports UE capability information (ul-FullPwrMode2-TPMIGroup-r16, which may be referred to as TPMI group capability information) related to a TPMI set (which may be referred to as a TPMI group) that enables fullpower transmission with respect to mode 2.

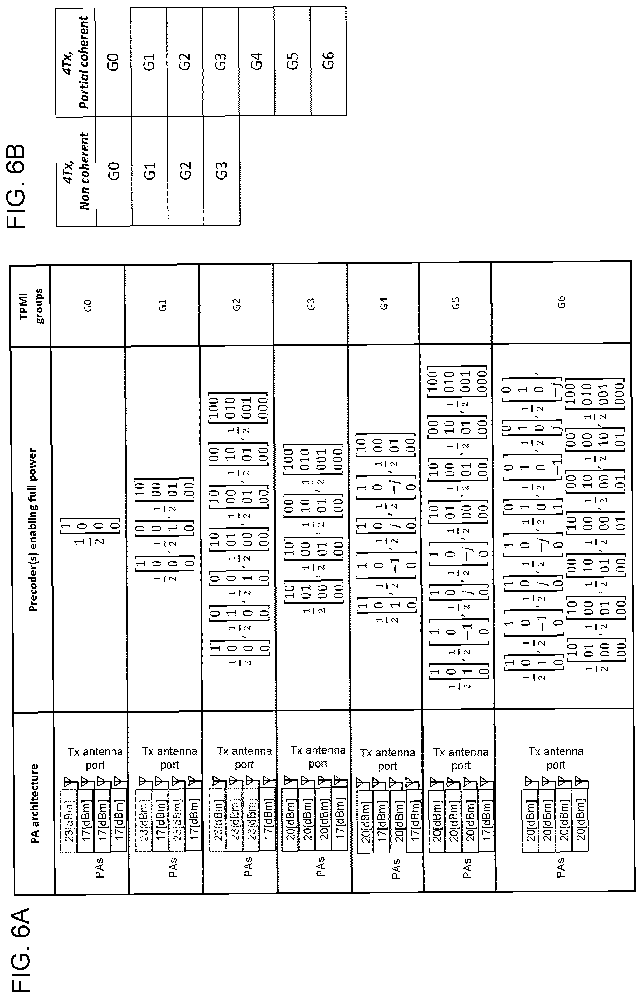

FIGS. 6A and 6B are each a diagram to show an example of TPMI groups. FIG. 6A shows precoding matrices (precoders) for PA architectures and ranks, corresponding to TPMI groups, with the number of transmission antenna ports being four. In a case where there are a plurality of precoders that enable fullpower transmission with respect to the same rank, any precoder of the plurality of precoders enables fullpower transmission with respect to the rank. The number of columns in each matrix may represent the number of layers.

FIG. 6B shows an example of TPMI groups assumed for a UE with four transmission antenna ports. A non-coherent UE with four transmission antenna ports can support any one of G0 to G3. A partial-coherent UE with four transmission antenna ports can support any one of G0 to G6.

Note that a UE may determine a mode to be used for PUSCH transmission, based on higher layer signaling (for example, RRC signaling), physical layer signaling (for example, DCI), or a combination of them. In other words, the UE may be configured or indicated with the mode for PUSCH transmission by UL fullpower transmission mode information (ul-FullPowerTransmission-r16) in a higher layer parameter (for example, PUSCH configuration information ("PUSCH-Config" information element)).

In a case where such UL fullpower transmission mode information configured for a UE indicates "fullpower," the UE may perform PUSCH fullpower transmission in accordance with mode 0. In a case where the UL fullpower transmission mode information configured for a UE indicates "fullpowerMode1," the UE may perform PUSCH fullpower transmission in accordance with mode 1. In a case where the UL fullpower transmission mode information configured for a UE indicates "fullpowerMode2," the UE may perform PUSCH fullpower transmission in accordance with mode 2.

In a case where a codebook subset included in the PUSCH configuration information is non-coherent or partial coherent (the RRC parameter "codebookSubset" = "nonCoherent" or "partialAndNonCoherent") and the PUSCH configuration information includes a parameter the UL fullpower transmission mode information indicating fullpower transmission (ul-FullPowerTransmission-r16), the UE may scale (for example, multiply or divide), by a certain coefficient s, a linear value of PUSCH transmit power determined based on a pathloss, transmit power control (TPC) command, or the like. Such a coefficient may be referred to as a power scaling coefficient, a scaling coefficient, or the like.

The UE may divide, equally for non-zero PUSCH antenna ports, a value obtained by scaling the linear value of the PUSCH transmit power by using the coefficient s. The UE may transmit the PUSCH in fullpower transmission, applying the coefficient s determined (or assumed) to a precoding matrix.

For example, in a case where SRS resources in an SRS resource set with codebook usage each have more than one SRS ports, a UE configured with mode 1 by the UL fullpower transmission mode information (which may be referred to as a mode-1 UE) may derive s = (the number of non-zero PUSCH antenna ports/the maximum number of SRS ports supported by the UE per SRS resource).

Here, the non-zero PUSCH antenna port may mean an antenna port having non-zero PUSCH transmit power or may mean an antenna port with a value other than zero (for example, 1, j), out of antenna ports that a precoding matrix (codebook subset) indicates the transmission.

For example, a case is considered where DCI indicates 4-port 1-layer transmission of FIG. 4 to a mode-1 UE. In Rel-16 NR, in a case where the mode-1 UE is a non-coherent UE, TPMI index = 13 may be indicated, and in this case, fullpower transmission can be performed. In a case where the mode-1 UE is a partial-coherent UE, TPMI index = 12 to 15 may be indicated, and in this case, fullpower transmission can be performed.

A UE configured with mode 2 by the UL fullpower transmission mode information (which may be referred to as a mode-2 UE) may apply s = 1 with respect to precoders corresponding to TPMIs (which may be referred to as fullpower TPMIs) reported as the TPMI group. For example, a case is considered where DCI indicates 4-port 1-layer transmission of FIG. 4 to a partial-coherent mode-2 UE having reported G4 of FIG. 6B.

In such a case, when any one of TPMI indices 4 to 7 corresponding to fullpower TPMIs with respect to G4 of FIG. 6A is indicated by the DCI, the mode-2 UE employs 1/√ (the number of non-zero PUSCH antenna ports of W) (in this case, 1/√2), as a value (coefficient part (1/2) of W) (in other words, instead of 1/2) of amplitude of W corresponding to TPMI indices 4 to 7. Furthermore, s = 1 described above is employed. This allows the mode-2 UE to perform fullpower transmission with respect to TPMI indices 4 to 7.

For precoders corresponding to the rest of the TPMIs (remaining TPMIs) other than the fullpower TPMIs, the mode-2 UE may derive s = (the number of non-zero PUSCH antenna ports/the number of SRS ports). Here, the number of SRS ports may be, if only one SRS resource is configured for an SRS resource set with codebook usage, the number of SRS ports related to the one SRS resource, and if more than one SRS resources are configured for the SRS resource set with codebook usage, the number of SRS ports may correspond to the number of SRS ports of an SRS resource indicated by an SRI. In the case where the partial-coherent mode-2 UE having reported G4 of FIG. 6B described above performs 4-port 1-layer transmission of FIG. 4, for TPMI indices 8 to 11, non-fullpower transmission can be performed (similarly to Rel. 15).

A UE configured with mode 0 by the UL fullpower transmission mode information (which may be referred to as a mode-0 UE) may employ s = 1.

For example, a case is considered where DCI indicates 4-port 1-layer transmission of FIG. 4 to a mode-0 UE. In Rel-16 NR, in a case where DCI indicates any one of non-coherent/partial-coherent precoders (TPMI index = 0 to 11) to the mode-0 UE, as a value (coefficient part (1/2) of W) of amplitude of corresponding W, 1/√ (the number of non-zero PUSCH antenna ports of W) (which is 1 in a case of the non-coherent precoder or 1/√2 in a case of the partial-coherent precoder) is employed. Furthermore, s = 1 described above is employed.

### (Precoding Information Field)

As described above, a UE may judge, based on the precoding information field of DCI (for example, DCI format 0_1/0_2) that schedules a PUSCH, a TPMI and the number of layers (transmission rank) for the PUSCH.

Regarding a codebook based PUSCH, the number of bits of the precoding information field may be judged (may fluctuate) based on a configuration of enabling/disabling a transform precoder for the PUSCH (for example, a higher layer parameter "transformPrecoder"), a configuration of a codebook subset for the PUSCH (for example, a higher layer parameter "codebookSubset"), a configuration of the maximum number of layers for the PUSCH (for example, a higher layer parameter "maxRank"), a configuration of uplink fullpower transmission for the PUSCH (for example, a higher layer parameter "ul-FullPowerTransmission"), the number of antenna ports for the PUSCH, or the like.

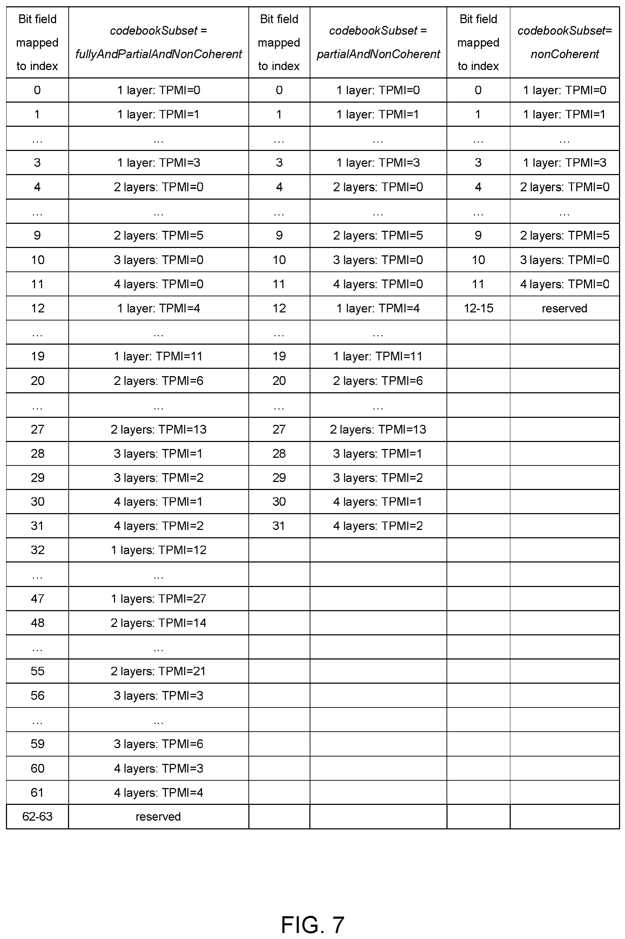

FIG. 7 is a diagram to show an example of a correspondence relation between a precoding information and number of layers field value and the number of layers and a TPMI, in Rel-16 NR. The correspondence relation in the present example is a correspondence relation for four antenna ports for a case where a transform precoder is configured to be disabled, where maximum rank (maxRank) is configured with 2, 3, or 4, and where uplink fullpower transmission is not configured or is configured with fullpower mode 2 (fullpowerMode2) or fullpower, but the example is not limited to this. Note that it should be understood by those skilled in the art that "Bit field mapped to index" shown in FIG. 7 indicates the values in the precoding information and number of layers field.

In FIG. 7, the precoding information field has 6 bits in a case where the codebook subset of full coherent (fullyAndPartialAndNonCoherent) is configured for a UE, has 5 bits in a case where the codebook subset of partial coherent (partialAndNonCoherent) is configured, and has 4 bits in a case where the codebook subset of non-coherent (nonCoherent) is configured.

Note that, as shown in FIG. 7, the number of layers and a TPMI that correspond to a certain precoding information field value may be the same (common) irrespective of the codebook subset configured for the UE. For example, in FIG. 7, the numbers of layers and TPMIs that are indicated with precoding information field values = 0 to 11 may be the same for the codebook subsets of full coherent (fullyAndPartialAndNonCoherent), partial coherent (partialAndNonCoherent), and non-coherent (nonCoherent). In FIG. 7, the numbers of layers and TPMIs that are indicated with precoding information field values = 0 to 31 may be the same for the codebook subsets of full coherent (fullyAndPartialAndNonCoherent) and partial coherent (partialAndNonCoherent).

Note that the precoding information field may have 0 bits for a non-codebook based PUSCH. The precoding information field may have 0 bits for a codebook based PUSCH with one antenna port.

### (Transmission with More Than Four Antenna Ports)

In Rel-15/16 NR, uplink (UL) Multi Input Multi Output (MIMO) transmission with up to four layers is supported. For future radio communication systems, in order to achieve higher spectral efficiency, supporting of UL transmission with the number of layers greater than four is under study. For example, for Rel-18 NR, transmission with up to 6 ranks using six antenna ports, transmission with up to 6 or 8 ranks using eight antenna ports, and the like are under study.

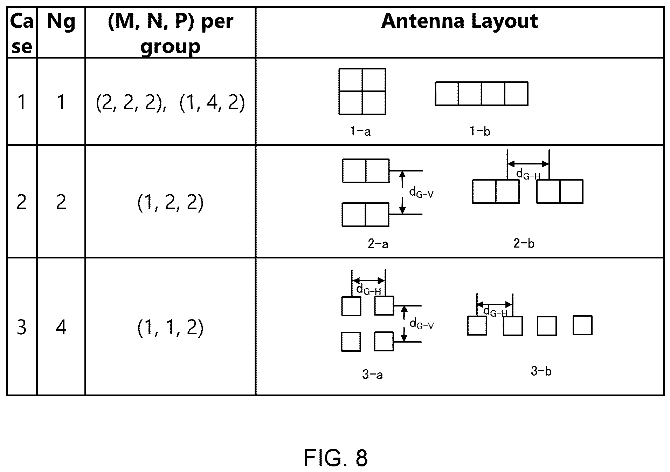

FIG. 8 is a diagram to show examples of an antenna layout of eight antenna ports. Ng is the number of antenna groups. M is the number of antennas (or antenna elements) in a first dimension. N is the number of antennas (or antenna elements) in a second dimension. For example, the first dimension and the second dimension are a horizontal direction and a vertical direction, respectively. P is the number of polarization planes. A case of P = 2 corresponds to a cross polarization antenna.

An antenna group may be referred to as a coherent group. A coherent group may include one or more coherent ports. For example, a partial-coherent UE may have a plurality of coherent groups. Antenna ports in a coherent group may be coherent with each other. Antenna ports between different coherent groups may not need to be coherent with each other.

Coherent groups may correspond to the respective different transmission panels/transmission chains (Tx chains)/SRS resource sets/RS resource sets/pieces of spatial relation information (spatial relation infos)/joint Transmission Configuration Indication states (joint TCI states)/UL TCI states/reception TRPs. Here, the SRS resource sets may especially correspond to SRS resource sets of codebook or non-codebook usage. The respective coherent groups may correspond to separate reception TRPs. A coherent group may be referred to as a coherent antenna group, a port group, an antenna group, or the like.

A UE may report an antenna group/antenna layout information/coherent number supported, as UE capability information. The UE may be configured with a coherent group (for example, the number of coherent groups and the number of ports included in each coherent group) by using higher layer signaling.

Note that the antenna layout is not limited to the examples shown in FIG. 8. For example, the number of panels that an antenna is disposed, panel orientation, coherency of each panel/antenna (such as full coherent, partial coherent, or non-coherent), an antenna layout in a specific direction (such as horizontal or vertical), and polarization antenna configuration (such as single polarization, cross polarization, and the number of polarization planes) may be different from those in the present examples. dG-H and dG-V respectively denote a horizontal gap and a vertical gap between centers of antenna groups adjacent to each other.

While, in Rel-15/16 NR, transmission with one codeword (CW) for one PUSCH is supported, for Rel-18 NR, it is under study that a UE transmits more than one CWs for one PUSCH. For example, supporting of 2CW transmission for ranks 5 to 8, supporting of 2CW transmission for ranks 2 to 8, and the like are under study.

Although, for a UE in Rel. 15 and Rel. 16, it is assumed that only one beam/panel is used for UL transmission at a certain time, for Rel. 17 or later versions, in order to improve UL throughput and reliability, simultaneous UL transmission (for example, PUSCH transmission) with a plurality of beams/panels for one or more TRPs is under study. Note that such simultaneous PUSCH transmission with a plurality of beams/panels may correspond to PUSCH transmission with the number of layers greater than four or may correspond to PUSCH transmission with the number of layers of four or smaller.

In addition, a precoding matrix for UL transmission using more than four antenna ports (the number of antenna ports more than four) is under study. For example, a codebook for 8-port transmission (which may be referred to as an 8 transmission UL codebook (8 TX UL codebook) or the like) is under study.

Similarly to FIGS. 1 to 4, the 8 TX UL codebook may include TPMI indices corresponding to a plurality of codebook subsets and a corresponding precoding matrix W for i-layer transmission (i is an integer, for example, i = 1, 2, ..., 8) using eight antenna ports. Such a study about the codebook may take an antenna group into account.

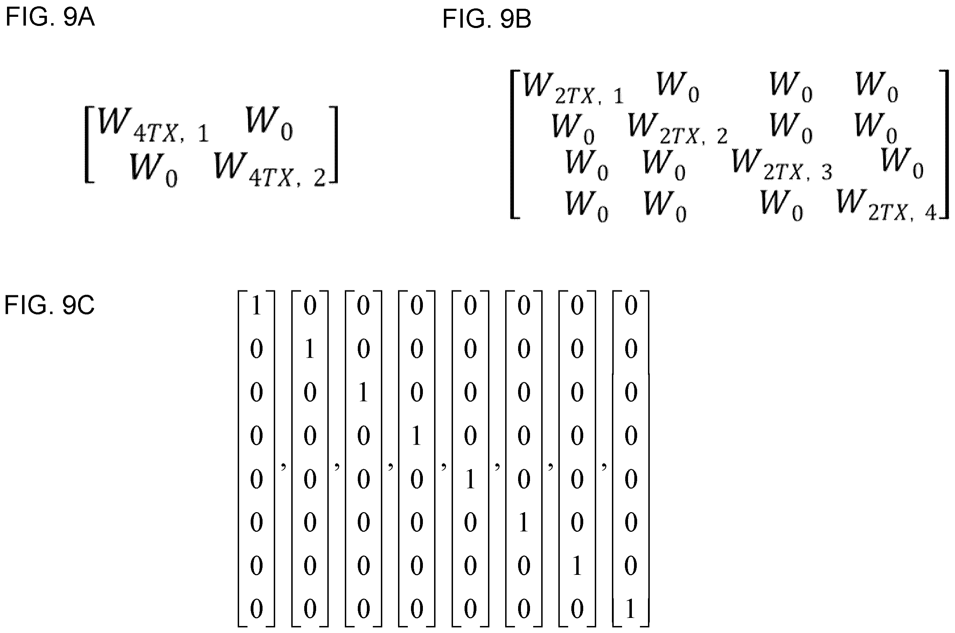

FIGS. 9A to 9C are each a diagram to show an example of a precoder associated with an antenna group. In the present disclosure, "8 TX of N_{g} = n (n is an integer, for example, 2, 4)" and "transmission using an antenna layout/antenna port having N_{g} = n antenna groups" may be interchangeably interpreted.

FIG. 9A relates to a PC precoder for 8 TX of N_{g} = 2 (8 TX with Ng = 2). The PC precoder may include W_{nTX, i} in diagonal blocks.

Here, in the present disclosure, W_{nTX, i} in a certain matrix (n and i are integers, for example, n = 2, 4, ... and i = 1, 2, 3, ...) may mean the i-th n TX (n-port) FC precoder included in the matrix. The number of columns in W_{nTX, i} differs depending on the cases (for example, which depends on the rank of the matrix). In the present disclosure, W₀ in a certain matrix may mean a matrix with all the elements (components) in the matrix being 0. The number of rows/columns in W₀ differs depending on the cases (for example, which may depend on another block located at the same row or column as W₀ in a case where the matrix is a block matrix).

FIG. 9A may correspond to a case of using two antenna groups and (rank of W_{4TX, 1}, rank of W_{4TX, 2}) = (1, 1), (2, 2), (3, 3), (4, 4), (1, 2), (2, 1), (2, 3), (3, 2), (3, 4), (4, 3), and the like. Note that, in a case where only one antenna group is used, transmission may be made by using W_{4TX, 1} or W_{4TX, 2}, and such a case may correspond to (rank of W_{4TX, 1}, rank of W_{4TX, 2}) = (1, 0), (2, 0), (3, 0), (4, 0), (0, 1), (0, 2), (0, 3), (0, 4), and the like.

FIG. 9B relates to a PC precoder for 8 TX of N_{g} = 4 (8 TX with Ng = 4). The PC precoder may include W_{nTX, i} in diagonal blocks. Combinations of ranks of W_{4TX, i} are one to eight in total and, similarly to the example of FIG. 9A, combinations free for some extent may be supported.

FIG. 9C relates to an NC precoder for 8 TX of N_{g} = 8 (8 TX with Ng = 8). The NC precoder is rank 1. Regarding NC precoders of ranks 2 to 8, combinations including any of eight NC precoders of FIG. 9C in the columns may be supported. For example, regarding ranks 1 to 8, 255 precoders in total may be supported.

For the 8 TX UL codebook, it is under study to define a new correspondence relation (for example, a correspondence relation different from the correspondence relation in FIG. 7) between a precoding information field value and the number of layers and a

### TPMI.

Meanwhile, studies have not yet progressed on UL fullpower transmission using more than four antenna ports (the number of antenna ports more than four). For example, studies have not been made on how fullpower transmission is performed in a case where PC/NC corresponding to a specific number of antenna groups is configured. Unless an appropriate control method for fullpower transmission is defined, an increase in communication throughput may be suppressed.

In view of this, the inventors of the present invention came up with the idea of a method for UL fullpower transmission using more than four antenna ports to be appropriately performed. An aspect of the present disclosure enables flexible control related to fullpower transmission.

Embodiments according to the present disclosure will be described in detail with reference to the drawings as follows.
The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information," "one or a plurality of pieces of spatial relation information," or the like. The TCI state and the TCI may be interchangeably interpreted.

In the following embodiments, a "plurality of" and "two" may be interchangeably interpreted.

In the following embodiments, the number of layers for PUSCH transmission may be greater than four or may be four or smaller. For example, PUSCH transmission with two CWs in the present disclosure may be performed with the number of layers being four or smaller (for example, two layers). The maximum number of layers is not limited to four or greater. The maximum number of layers smaller than four may be employed.

PUSCH transmission in the following embodiments may or may not be premised on use of a plurality of panels (may be employed irrespective of panels).

In the present disclosure, mode-0, mode-1, and mode-2 UEs respectively mean UEs configured with the UL fullpower transmission mode information indicating "fullpower," "fullpowerMode1," and "fullpowerMode2," but this is not restrictive. In the present disclosure, "fullpower," "fullpowerMode1," "fullpowerMode2," and the like may have different names (for example, "fullpower-r17," "fullpowerMode1-r17," "fullpowerMode2-r17," and the like). In the present disclosure, the UL fullpower transmission mode information may be a different parameter (for example, ul-FullPowerTransmission-r17) instead of ul-FullPowerTransmission-r16.

Although a UE that performs fullpower transmission in the following embodiments is assumed to be a partial-coherent/non-coherent UE, the UE may be a UE configured with another coherent type.

In the present disclosure, a TPMI and a TPMI index may be interchangeably interpreted. A port and an antenna port may be interchangeably interpreted. 8 TX (8 transmission) may mean eight ports or eight antenna ports. A port/antenna port may mean a port/antenna port for UL (for example, SRS/PUSCH) transmission. In the present disclosure, an SRS resource set and a resource set may be interchangeably interpreted. A coherent group and an SRS resource set may be interchangeably interpreted.

Although the present disclosure mainly describes 8 TX, the description may be applied to 5 TX, 6 TX, 7 TX, 8 or more TX, 4 or less TX, and the like, similarly to the case of 8 TX. In the following embodiments, "8" may be interpreted as "n (n is any integer)," and with this, the number of layers/ports or the like described assuming a maximum value being "8" can be appropriately interpreted assuming the maximum value being "n" by those skilled in the art.

For example, in the following embodiments, a number "8" may be interpreted as any number greater than 4 (for example, 6, 10, 12, 16, ...) or may be interpreted as any number 4 or smaller (for example, 1, 2, 3, 4).

Note that, in the present disclosure, "having a capability of ..." and "supporting/reporting a capability of ..." may be interchangeably interpreted.

In the present disclosure, a rank, a transmission rank, the number of layers, and the number of antenna ports may be interchangeably interpreted. A case that one codeword is employed and a case that the number of layers is four layers or less may be interchangeably interpreted. A case that two codewords are employed and a case that the number of layers is more than four layers may be interchangeably interpreted.

In the present disclosure, a table and one or a plurality of tables may be interchangeably interpreted.

In the following embodiments, DCI may mean DCI (for example, DCI format 0_x, 1_x (here, x is an integer)) that schedules at least one of a PUSCH and a PDSCH. Although the following embodiments are premised on codebook based transmission (PUSCH), this is not restrictive, and each embodiment may be applied to non-codebook based transmission (PUSCH).

In the present disclosure, fullpower transmission, fullpower UL transmission, UL fullpower transmission, UE maximum power transmission, UE allowable maximum power transmission, and the like may be interchangeably interpreted.

In the following embodiments, "for a PC (/NC/FC) precoder" and "for a case that a codebook subset of PC (/NC/FC) is configured for a UE" may be interchangeably interpreted.

In the following embodiments, "not taking account of fullpower transmission" may be interchangeably interpreted as "fullpower transmission is not configured for a UE," "fullpower mode 2 (fullpowerMode2) is configured for a UE," "fullpower is configured for a UE," or the like.

In the following embodiments, fullpower mode 1 and another fullpower mode (for example, fullpower mode 3) may be interchangeably interpreted.

In the present disclosure, the precoding information field may be interchangeably interpreted as a TRI/TPMI field, a field usable for identification of the number of layers (rank) or a TPMI, a port index field, or the like.

### (Radio Communication Method)

### <First Embodiment>

A first embodiment relates to a fullpower transmission precoder for 8 TX of N_{g} = 2 (8 TX with Ng = 2).

The first embodiment may be premised on a first assumption as below:
- First assumption: with regard to 8 TX of N_{g} = 2 for a PC precoder, a design of a codebook for the PC precoder for N_{g} = 2 not taking account of fullpower transmission is already fixed. Such a codebook may be referred to as a basic codebook, a base codebook, or the like.

In other words, the first assumption may mean that a UE knows (for example, is defined in advance or configured with) a correspondence relation between a precoding information field value and the number of layers/a TPMI, a correspondence relation (codebook) between the number of layers/the TPMI and a specified precoder, and the like, for the PC precoder for N_{g} = 2 not taking account of fullpower transmission.

In the first embodiment, for 8 TX of N_{g} = 2 for the PC precoder, in a case where fullpower mode 1 (fullpowerMode1) is configured, an additional precoder for supporting of UL fullpower transmission may be used (for example, may be added to the codebook described above), based on the codebook defined in the first assumption. Such an additional precoder may be specified for the UE, based on (the precoding information field of) DCI.

The additional precoder may comply with at least one of the following:
(1) one or more additional precoders are added per rank
(2) one additional precoder is added only to rank 1 and no additional precoder is added to the other ranks
(3) more than one additional precoders are added only to rank 1 and no additional precoder is added to the other ranks

In (1) to (3) described above, the additional precoder may be an FC precoder.

In (2) and (3) described above, a reason for "no additional precoder is added to the other ranks" is that base codebooks for ranks of rank 2 and higher defined in the first assumption each include precoders (FC precoders) using all the antenna ports. These precoders have a corresponding scaling coefficient being 1 and are available for fullpower transmission. Thus, in (2) and (3) described above, for ranks of rank 2 and higher, an FC precoder of a base codebook may be specified for a UE by using (the precoding information field of) DCI, for fullpower transmission to be performed.

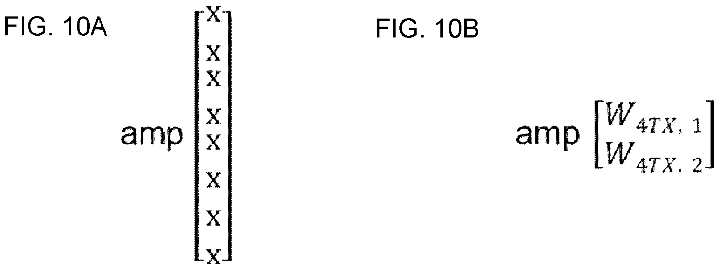

FIGS. 10A and 10B are each a diagram to show an example of an additional precoder for rank 1 according to the first embodiment. In the present example, "amp" corresponds to a coefficient (amplitude) that the matrix following thereto is multiplied by, and it may be calculated such that the scaling coefficient is 1. For example, it may be calculated by amp = 1/√(the number of non-zero PUSCH antenna ports in W).

In FIG. 10A, "x" is a non-zero value. For example, "x" may be any value such that the absolute value is 1. For example, "x" may be a value corresponding to at least one of {1, -1, j, -j} (here, j is an imaginary number). Every "x" in the matrix may be the same value (for example, 1), more than one "x" may correspond to real numbers (for example, {1, -1}) different from each other, or more than one "x" may correspond to real numbers /imaginary numbers (for example, at least two of {1, -1, j, -j}) different from each other.

Regarding "amp" and "x," this may similarly apply to the following drawings and description of the present disclosure, and thus the duplicate description is omitted.

In FIG. 10B, W_{4TX, 1} and W_{4TX, 2} may be FC precoders in a 4 TX UL codebook of rank 1 in existing Rel. 15 to Rel. 17, for example. Note that W_{4TX, 1} and W_{4TX, 2} may be limited to the same precoder or may be allowed to be different precoders.

The additional precoder for rank 1 according to the first embodiment may be a precoder other than the example of FIG. 10A or 10B. The additional precoder may be a specific FC precoder (for example, the first FC precoder (with the smallest TPMI)) in an 8 TX UL codebook of rank 1.

According to the first embodiment described above, an 8-TX UE that has two antenna groups and that is configured with a partial-coherent codebook subset and fullpower mode 1 can appropriately judge a precoder available for fullpower transmission.

<Second Embodiment>

A second embodiment relates to a fullpower transmission precoder for 8 TX of N_{g} = 4 (8 TX with Ng = 4).

The second embodiment may be premised on a second assumption as below:
- Second assumption: with regard to 8 TX of N_{g} = 4 for a PC precoder, a design of a codebook for the PC precoder for N_{g} = 4 not taking account of fullpower transmission is already fixed. Such a codebook may be referred to as a basic codebook, a base codebook, or the like.

In other words, the second assumption may mean that a UE knows (for example, is defined in advance or configured with) a correspondence relation between a precoding information field value and the number of layers/a TPMI, a correspondence relation (codebook) between the number of layers/the TPMI and a specified precoder, and the like, for the PC precoder for N_{g} = 4 not taking account of fullpower transmission.

In the second embodiment, for 8 TX of N_{g} = 4 for the PC precoder, in a case where fullpower mode 1 (fullpowerMode1) is configured, an additional precoder for supporting of UL fullpower transmission may be used (for example, may be added to the codebook described above), based on the codebook defined in the second assumption. Such an additional precoder may be specified for the UE, based on (the precoding information field of) DCI.

The additional precoder may comply with at least one of the following:
(1) one or more additional precoders are added per rank
(2) one additional precoder is added to each of ranks 1 to 3 and no additional precoder is added to the other ranks (ranks of rank 4 and higher)
(3) one or more additional precoders are added to each of ranks 1 to 3 and no additional precoder is added to the other ranks (ranks of rank 4 and higher)

In (1) and (2) described above, the additional precoder may be an FC precoder. In (3) described above, the additional precoder may be an FC/PC precoder (note that for rank 1, limited to an FC precoder).

In (2) and (3) described above, a reason for "no additional precoder is added to the other ranks" is that base codebooks for ranks of rank 4 and higher defined in the second assumption each include precoders (FC precoders) using all the antenna ports. These precoders have a corresponding scaling coefficient being 1 and are available for fullpower transmission. Thus, in (2) and (3) described above, for ranks of rank 4 and higher, an FC precoder of a base codebook may be specified for a UE by using (the precoding information field of) DCI, for fullpower transmission to be performed.

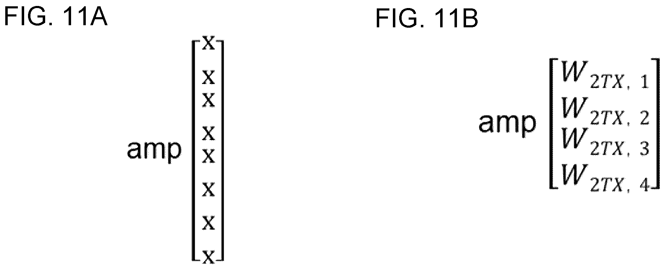

FIGS. 11A and 11B are each a diagram to show an example of an additional precoder for rank 1 according to the second embodiment. FIG. 11A is similar to FIG. 10A.

In FIG. 11B, W_{2TX, i} (i = 1, ..., 4) may be FC precoders in a 2 TX UL codebook of rank 1 in existing Rel. 15 to Rel. 17, for example. Note that at least two (or all) of W_{2TX, i} (i = 1, ..., 4) may be limited to the same precoder or may be allowed to be different precoders.

The additional precoder for rank 1 according to the second embodiment may be a precoder other than the example of FIG. 11A or 11B. The additional precoder may be a specific FC precoder (for example, the first FC precoder (with the smallest TPMI)) in an 8 TX UL codebook of rank 1.

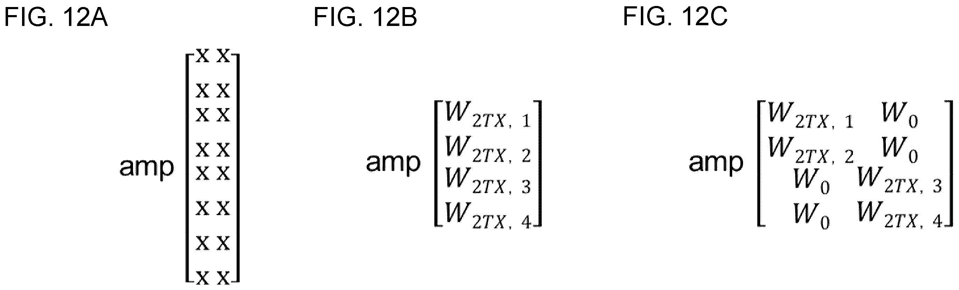

FIGS. 12A to 12C are each a diagram to show an example of an additional precoder for rank 2 according to the second embodiment. FIG. 12A shows an additional precoder including a matrix consisting of 8-row 2-column of "x." FIG. 12B is similar to FIG. 11B, but is different in that W_{2TX, i} (i = 1, ..., 4) are FC precoders in a 2 TX UL codebook of rank 2 in existing Rel. 15 to Rel. 17.

The additional precoder for rank 2 of FIG. 12C is a PC precoder. W_{2TX, i} (i = 1, ..., 4) may be FC precoders in a 2 TX UL codebook of rank 1 in existing Rel. 15 to Rel. 17, for example. Note that at least two (or all) of W_{2TX, i} (i = 1, ..., 4) may be limited to the same precoder or may be allowed to be different precoders. With the precoder of FIG. 12C, fullpower transmission may be achieved for each antenna group.

The additional precoder for rank 2 according to the second embodiment may be a precoder other than the examples of FIGS. 12A to 12C. The additional precoder may be a specific FC precoder (for example, the first FC precoder (with the smallest TPMI)) in an 8 TX UL codebook of rank 2.

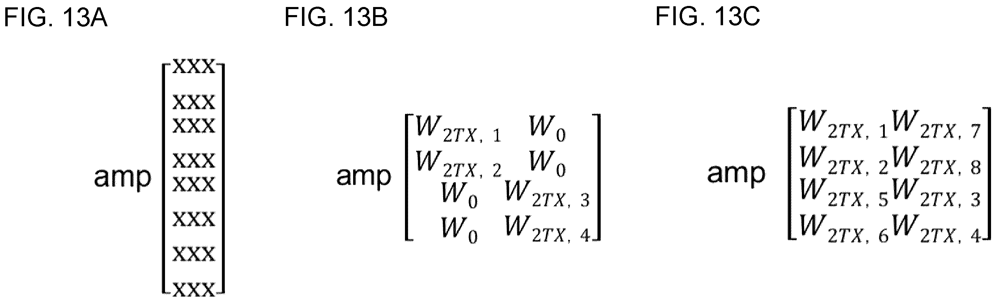

FIGS. 13A to 13C are each a diagram to show an example of an additional precoder for rank 3 according to the second embodiment. FIG. 13A shows an additional precoder including a matrix consisting of 8-row 3-column of "x." FIG. 13B is similar to FIG. 12C, but is different in that (rank of W_{2TX, 1/2}, rank of W_{2TX, 3/4}) = (2, 1) or (1, 2).

In FIG. 13C, W_{2TX, i} (i = 1, ..., 8) may be FC precoders in a 2 TX UL codebook in existing Rel. 15 to Rel. 17, for example. Note that (rank of W_{2TX, 1/2/5/6}, rank of W_{2TX, 3/4/7/8}) = (2, 1) or (1, 2). At least two (or all) of W_{2TX, i} (i = 1, 2, 5, 6) may be limited to the same precoder or may be allowed to be different precoders. At least two (or all) of W_{2TX, i} (i = 13, 4, 7, 8) may be limited to the same precoder or may be allowed to be different precoders.

The additional precoder for rank 3 according to the second embodiment may be a precoder other than the examples of FIGS. 13A to 13C. The additional precoder may be a specific FC precoder (for example, the first FC precoder (with the smallest TPMI)) in an 8 TX UL codebook of rank 3.

According to the second embodiment described above, an 8-TX UE that has four antenna groups and that is configured with a partial-coherent codebook subset and fullpower mode 1 can appropriately judge a precoder available for fullpower transmission.

### <Third Embodiment>

A third embodiment relates to a fullpower transmission precoder for 8 TX of N_{g} = 8 (8 TX with Ng = 8).

The third embodiment may be premised on a third assumption as below:
- Third assumption: with regard to 8 TX of N_{g} = 8 for an NC precoder, a design of a codebook for the NC precoder for N_{g} = 8 not taking account of fullpower transmission is already fixed. Such a codebook may be referred to as a basic codebook, a base codebook, or the like.

In other words, the third assumption may mean that a UE knows (for example, is defined in advance or configured with) a correspondence relation between a precoding information field value and the number of layers/a TPMI, a correspondence relation (codebook) between the number of layers/the TPMI and a specified precoder, and the like, for the NC precoder for N_{g} = 8 not taking account of fullpower transmission.

In the third embodiment, for 8 TX of N_{g} = 8 for the NC precoder, in a case where fullpower mode 1 (fullpowerMode1) is configured, an additional precoder for supporting of UL fullpower transmission may be used (for example, may be added to the codebook described above), based on the codebook defined in the third assumption. Such an additional precoder may be specified for the UE, based on (the precoding information field of) DCI.

The additional precoder may comply with at least one of the following:
(1) one or more additional precoders are added per rank
(2) one additional precoder is added to each of ranks 1 to 7 and no additional precoder is added to the other rank (rank 8)
(3) one or more additional precoders are added to each of ranks 1 to 7 and no additional precoder is added to the other rank (rank 8)

In (1) and (2) described above, the additional precoder may be an FC precoder. In (3) described above, the additional precoder may be an FC/PC precoder (note that for rank 1, limited to an FC precoder).

In (2) and (3) described above, a reason for "no additional precoder is added to the other rank" is that base codebooks for rank 8 defined in the third assumption each include precoders (FC precoders) using all the antenna ports. These precoders have a corresponding scaling coefficient being 1 and are available for fullpower transmission. Thus, in (2) and (3) described above, for rank 8, an FC precoder of a base codebook may be specified for a UE by using (the precoding information field of) DCI, for fullpower transmission to be performed.

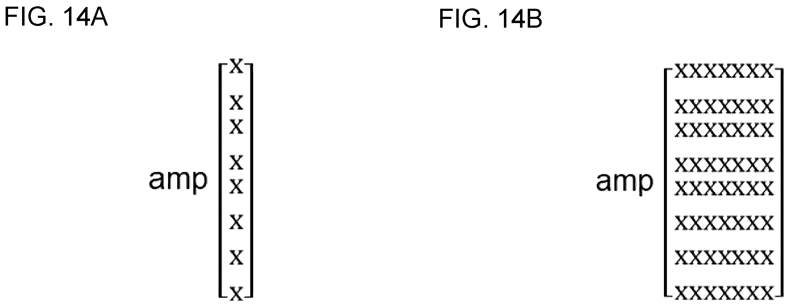

FIG. 14A is a diagram to show an example of an additional precoder for rank 1 according to the third embodiment. FIG. 14A is similar to FIG. 10A.

The additional precoder for rank 1 according to the third embodiment may be a precoder other than the example of FIG. 14A. The additional precoder may be a specific FC precoder (for example, the first FC precoder (with the smallest TPMI)) in an 8 TX UL codebook of rank 1.

FIG. 14B is a diagram to show an example of an additional precoder for rank 7 according to the third embodiment. FIG. 14B shows an additional precoder including a matrix consisting of 8-row 7-column of "x."

The additional precoder for rank 7 according to the third embodiment may be a precoder other than the example of FIG. 14B. The additional precoder may be a specific FC precoder (for example, the first FC precoder (with the smallest TPMI)) in an 8 TX UL codebook of rank 7.

According to the third embodiment described above, an 8-TX UE that has eight antenna groups and that is configured with a non-coherent codebook subset and fullpower mode 1 can appropriately judge a precoder available for fullpower transmission.

### <Fourth Embodiment>

A fourth embodiment relates to contents identified in the precoding information field.

The fourth embodiment may be premised on a fourth assumption as below:
- Third assumption: for at least two (or all) of three cases "N_{g} = 2 for a PC precoder," "N_{g} = 4 for a PC precoder," and "N_{g} = 8 for an NC precoder," different correspondence relations (for example, tables) for the precoding information field are used.

Note that, for the other conditions, these different correspondence relations may be the same. The other conditions may include at least one of the following:
- whether a transform precoder is disabled or enabled
- configured maximum rank (maxRank)
- whether uplink fullpower transmission is possible (no configuration, fullpower, fullpower more 1, 2, or 3)
- the number of antenna ports (for example, the number of ports = 8)

In the fourth embodiment, for each case described above, when fullpower mode 1 (fullpowerMode1) is configured, each correspondence relation of the fourth assumption may be defined by adding (replacing an existing row with) a row (entry) indicating an additional precoder/corresponding rank for UL fullpower transmission, to an existing correspondence relation (for similar conditions).

Note that the existing correspondence relation may be a correspondence relation defined in Rel. 15 to Rel. 17 referenced to in a similar condition for a case of no fullpower mode 1 configured, or may be a correspondence relation newly defined (for example, taking account of N_{g}) referenced to in a similar condition for the case of no fullpower mode 1 configured.

The row to be added/replaced may correspond to the last row in a table (for example, may be added after the last row of an existing table), or may correspond to any position in a table (for example, may be added after the last row of rows indicating the same rank).

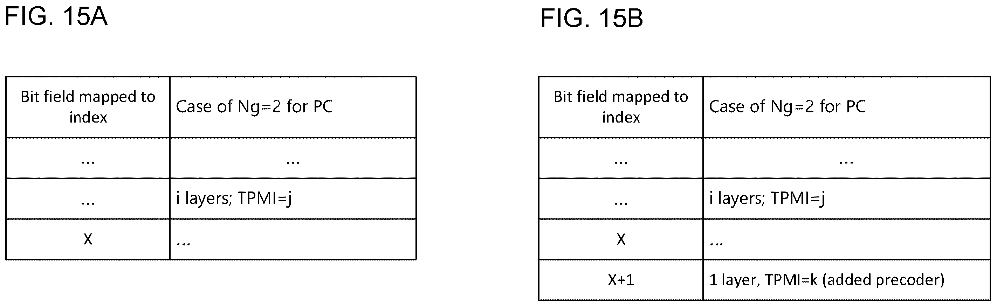

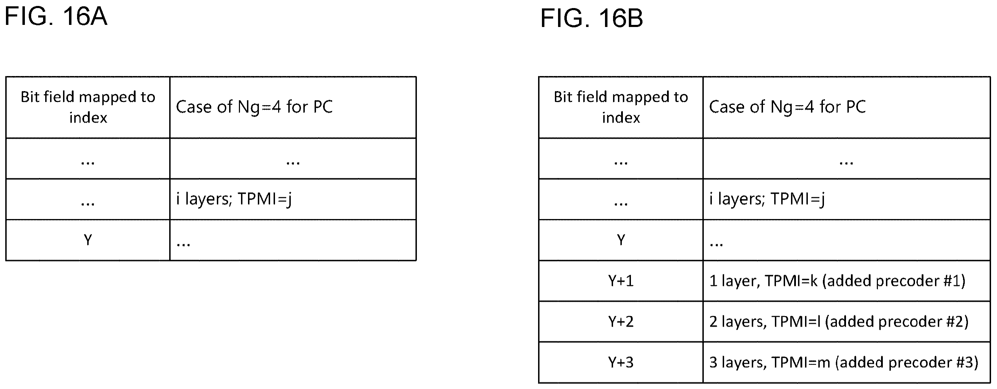

FIGS. 15A and 15B are each a diagram to show an example of a correspondence relation between a precoding information field value and the number of layers and a TPMI according to the fourth embodiment. Note that it should be understood by those skilled in the art that "Bit field mapped to index" shown in FIGS. 15A and 15B indicates the values in the precoding information and number of layers field (this similarly applies to FIGS. 16A and 16B).

FIG. 15A is an example of a correspondence relation to be referenced to for N_{g} = 2 for a PC precoder in a case where fullpower mode 1 is not configured. FIG. 15B is an example of a correspondence relation to be referenced to for N_{g} = 2 for a PC precoder in a case where fullpower mode 1 is configured. FIGS. 15A and 15B may each correspond to a case where maximum rank (an RRC parameter "maxRank") = 1 is configured for a UE.

The correspondence relation in FIG. 15B corresponds to a table obtained by adding a row (a row of bit field = X + 1) indicating an additional precoder corresponding to 1 layer and TPMI = k, after the last row (a row of bit field = X) in the correspondence relation of FIG. 15A.

Note that, for an entry that is on and after bit field = X + 2 and that is not enabled, reservation (Reserved) may be indicated.

FIGS. 16A and 16B are each a diagram to show an example of a correspondence relation between a precoding information field value and the number of layers and a TPMI according to the fourth embodiment.

FIG. 16A is an example of a correspondence relation to be referenced to for N_{g} = 4 for a PC precoder in a case where fullpower mode 1 is not configured. FIG. 16B is an example of a correspondence relation to be referenced to for N_{g} = 4 for a PC precoder in a case where fullpower mode 1 is configured. FIGS. 16A and 16B may each correspond to a case where maximum rank (the RRC parameter "maxRank") = 3 (or 3 or higher) is configured for a UE.

The correspondence relation in FIG. 16B corresponds to a table obtained by adding a row (a row of bit field = Y + 1) indicating additional precoder #1 corresponding to 1 layer and TPMI = k, a row (a row of bit field = Y + 2) indicating additional precoder #2 corresponding to 2 layers and TPMI = l, and a row (a row of bit field = Y + 3) indicating additional precoder #3 corresponding to 3 layers and TPMI = m, after the last row (a row of bit field = Y) in the correspondence relation of FIG. 16A.

Note that, for an entry that is on and after bit field = Y + 4 and that is not enabled, reservation (Reserved) may be indicated.

According to the fourth embodiment described above, an 8-TX UE configured with fullpower mode 1 can appropriately judge a precoder available for fullpower transmission, depending on antenna groups.

### <Supplements>

In the present disclosure, a case that the UE/base station uses (/ refers to/performs processing on the basis of) a table is not limited to the meaning of use of the table itself, and may mean use of a sequence, list, function, or the like including information according to the table.

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information for at least one of the above-described embodiments
- supporting of 8 TX UL transmission
- supported coherent group
- PA architecture related information
- supporting of fullpower mode 1 (or 3)

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. Examples of the specific information may include information indicating enabling of 8 TX UL transmission, information indicating enabling of fullpower mode 1 (or 3), any RRC parameter for a specific release (for example, Rel. 18/19), and the like.

When the UE does not support at least one of the specific UE capabilities above or is not configured with the specific information, operation of Rel. 15/16/17 may be applied, for example.

### (Supplementary Note)

Regarding one embodiment of the present disclosure, the following supplementary note of the invention will be given.

### {Supplementary Note 1}

A terminal including:
a control section that selects, in a case where fullpower mode 1 is configured for a transmission corresponding to a specific number of antenna groups, a precoder added from a codebook with the fullpower mode 1 not configured; and
a transmitting section that performs fullpower transmission by employing the precoder.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

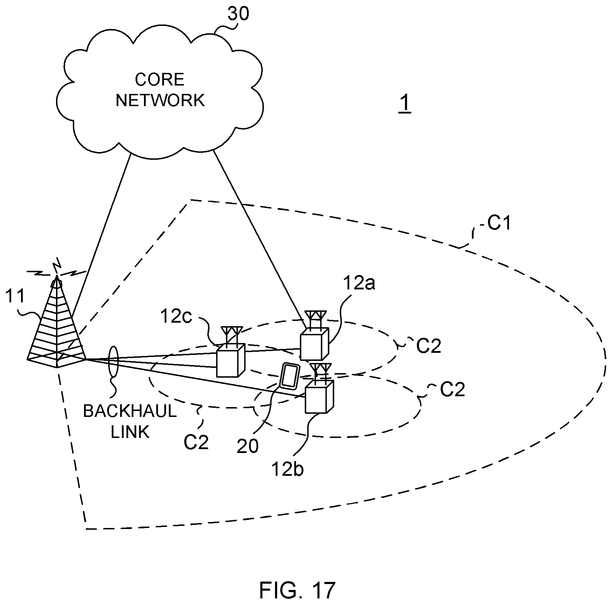

FIG. 17 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

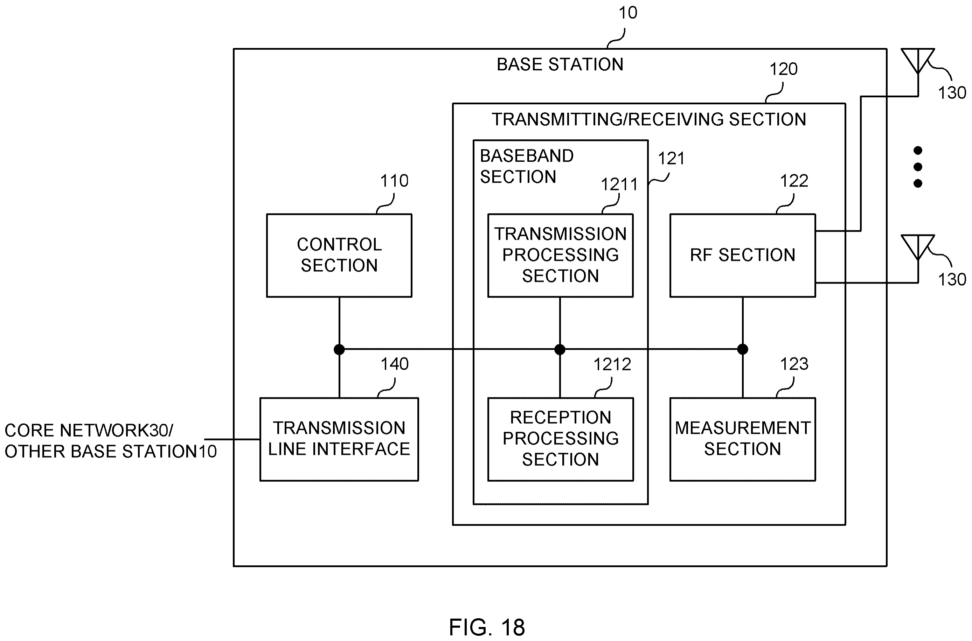

FIG. 18 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing an NF), another base station 10, or the like for acquisition, transmission, or the like of user data (user plane data), control plane data, and the like for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit, to the user terminal 20, configuration information (configuration of RRC) of fullpower mode 1, for a transmission corresponding to a specific number of antenna groups. The transmitting/receiving section 120 may receive a transmission (for example, PUSCH) transmitted in fullpower transmission by the user terminal 20, by employing a precoder added from a codebook with the fullpower mode 1 not configured.

### (User Terminal)

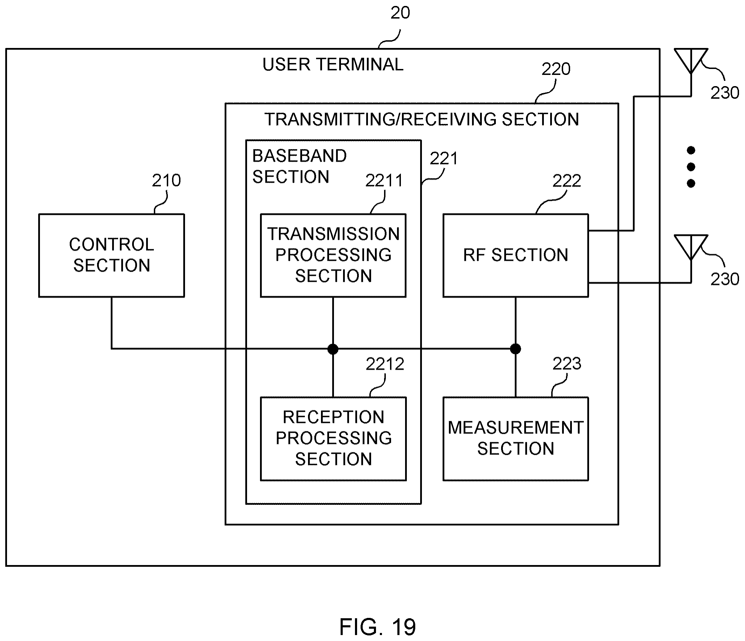

FIG. 19 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

Note that the control section 210 may select, in a case where fullpower mode 1 is configured for a transmission corresponding to a specific number of antenna groups, a precoder (additional precoder) added from a codebook with the fullpower mode 1 not configured. The transmitting/receiving section 220 may perform fullpower transmission by employing the precoder.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

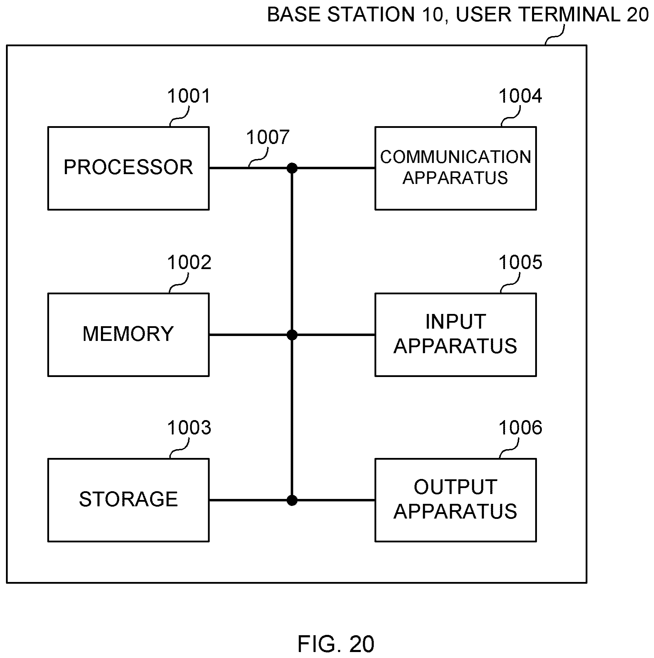

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

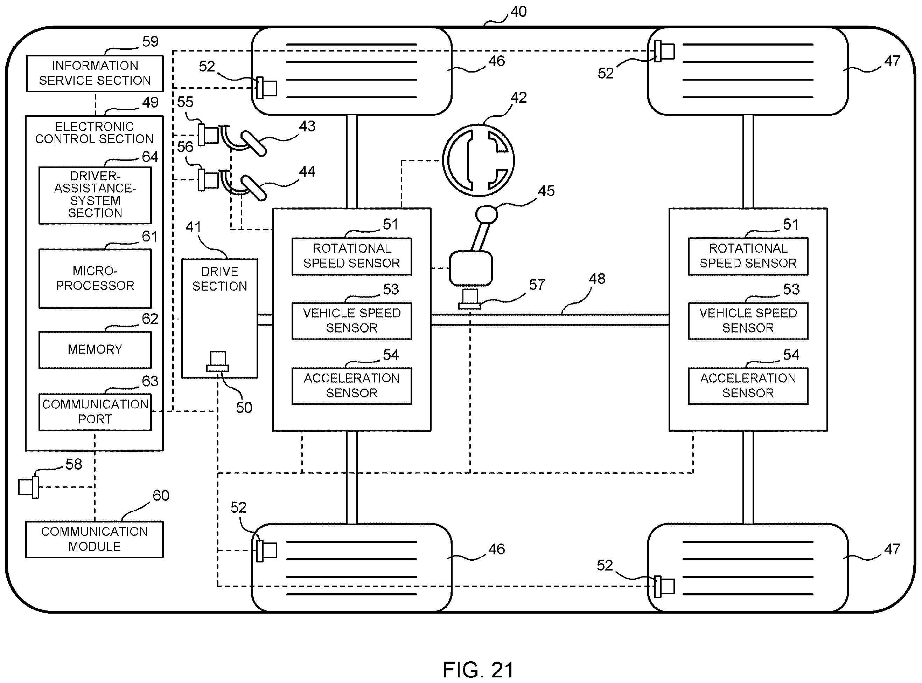

FIG. 21 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-86466, filed on May 25, 2023, the contents of which are incorporated herein by reference in their entirety.

## Claims

1. A terminal comprising:
a control section that selects, in a case where fullpower mode 1 is configured for a transmission corresponding to a specific number of antenna groups, a precoder added from a codebook with the fullpower mode 1 not configured; and
a transmitting section that performs fullpower transmission by employing the precoder.

2. A radio communication method for a terminal, the radio communication method comprising:
selecting, in a case where fullpower mode 1 is configured for a transmission corresponding to a specific number of antenna groups, a precoder added from a codebook with the fullpower mode 1 not configured; and
performing fullpower transmission by employing the precoder.

3. A base station comprising:
a transmitting section that transmits, to a terminal, configuration information of fullpower mode 1, for a transmission corresponding to a specific number of antenna groups; and
a receiving section that receives a transmission transmitted in fullpower transmission by the terminal, by employing a precoder added from a codebook with the fullpower mode 1 not configured.
